# EUROPÄISCHE PATENTSCHRIFT

(11) **EP 2 767 494 B1**
(45) Veröffentlichungstag und Bekanntmachung des Hinweises auf die Patenterteilung: **31.05.2017**
(21) Anmeldenummer: 14152373.8
(22) Anmeldetag: 24.01.2014
(51) Int. Cl.: B65H 29/18, B65H 31/10, B65H 31/24, B65G 21/14

(54) **Vorrichtung zum Auslegen von in einem Produktstrom zugeführten Druckereiprodukten in zwei voneinander getrennten Stapeln**
Device for laying out printed products fed in a single product flow into two separate stacks
Dispositif d'application de produits d'imprimerie acheminés dans un flux de produits dans deux piles séparées l'une de l'autre

(30) Priorität: 19.02.2013 DE 102013002754
(43) Veröffentlichungstag der Anmeldung: 20.08.2014
(73) Patentinhaber: Müller Martini Holding AG, 6052 Hergiswil (CH)
(72) Erfinder: Knöfel, Jens, 04821 Brandis (DE); Richter, Lutz, 04435 Schkeuditz (DE); Sommerer, Frank, 04288 Leipzig (DE)

(56) Entgegenhaltungen:
- EP-A1- 1 155 998
- EP-A2- 0 638 502
- JP-U- H0 218 448
- NL-A- 8 603 162

## Beschreibung

Die Erfindung betrifft eine Vorrichtung zum Auslegen von in einem Produktstrom zugeführten Druckereiprodukten, insbesondere Buchblöcken oder Büchern, in mindestens zwei voneinander getrennten Stapeln.

Aus der DD 233545 A1, CH 663385 A5, DE 19628128 B4 und DE 19628129 B4 sind Kreuzleger und Buchblockstapler bekannt, welche bei der Produktion von in einem fortlaufenden Produktstrom bereit gestellten Druckereiprodukten einer Bindereimaschine nachgeordnet sind. Den zuvor genannten Schriften ist kein Hinweis auf die Auslage von Druckereiprodukten mit unterschiedlichen Formaten in mehreren voneinander getrennten Stapeln bei laufender Produktion entnehmbar, und die in den zuvor genannten Schriften offenbarten Vorrichtungen erlauben es ebenfalls nicht, die Formateinstellung während der laufenden Produktion zu verändern. EP 1 155 998 A1 offenbart eine Vorrichtung gemäß dem Oberbegriff des Anspruchs 1.

Zudem sind die zuvor genannten Kreuzleger und Buchblockstapler in technischer Hinsicht vergleichsweise aufwändig und aufgrund der im Maschinentakt bewegten Bauteile störanfällig und teuer, so dass sie in erster Linie in Verbindung mit Hochleistungsdruckereimaschinen zum Einsatz gelangen, die für Produzenten kleiner Auflagen jedoch in der Regel zu teuer sind.

Ein weiteres Problem der zuvor erwähnten Kreuzleger und Buchblockstapler besteht darin, dass diese nicht gleichzeitig als Auslagevorrichtungen für mehrere Klebebinder, bzw. zur Verarbeitung der Produkte einer oder mehrerer Digitaldruckmaschinen genutzt werden können, da ein Mischbetrieb mit unterschiedlichen Druckereiprodukten, bzw. Druckereiprodukten mit unterschiedlichen Formaten aufgrund einer fehlenden Umschaltbarkeit auf unterschiedlich Formate während der laufenden Produktion nicht möglich ist.

Demgemäß ist es eine Aufgabe der vorliegenden Erfindung, eine Vorrichtung und ein Verfahren zum Auslegen von in einem Produktstrom zugeführten Druckereiprodukten, insbesondere Buchblöcken oder Büchern, in mindestens zwei voneinander getrennten Stapeln zu schaffen, ohne dass der zugeführte Produktstrom an Druckereiprodukten unterbrochen wird.

Diese Aufgabe wird erfindungsgemäß durch die Merkmale von Anspruch 1 und 10 gelöst.

Gemäß der Erfindung umfasst eine Vorrichtung zum Auslegen von in einem Produktstrom bereitgestellten Druckereiprodukten, insbesondere Buchblöcken oder Büchern, in mindestens zwei voneinander getrennten Stapeln ein endlos umlaufendes Transportband, auf welchem die Druckereiprodukte bei ihrer Zufuhr als Produktstrom abgelegt werden. Die Vorrichtung umfasst weiterhin eine ersten obere stromaufwärtige gestellfeste Umlenkwalze und eine dieser in Zufuhrrichtug der Druckereiprodukte nachgeordnete zweite obere Umlenkwalze, die im Wesentlichen in einer horizontalen Ebene mit der ersten Umlenkwalze angeordnet und relativ zu dieser bevorzugt parallel zur horizontalen Ebene linear verfahrbar ist. Unterhalb der zweiten Umlenkwalze ist eine gemeinsam mit der zweiten Umlenkwalze verfahrbare dritte Umlenkwalze angeordnet, unterhalb von welcher sich wenigstens eine gestellfeste vierte Umlenkwalze befindet, über die das Transportband geführt ist.

Die erfindungsgemäße Vorrichtung umfasst weiterhin einen Aktuator, beispielsweise einen Pneumatikzylinder oder auch einen elektrischen Stellantrieb, der über einen Zugmittelantrieb auf die in einem festen Abstand angeordnete und vorzugsweise mechanisch miteinander gekoppelte zweite und dritte Umlenkwalze wirkt, um diese gemeinsam linear in einer parallel zur horizontalen Ebene verlaufenden Richtung aus einer ersten Auslageposition, in der die Druckereiprodukte mit ihrer vorlaufenden Seite (in der Regel der Buchrücken, da dies das Stapeln unbeschnittener Produkte erleichtert) voraus an einen oberhalb eines Produktaufnahmeraums für den ersten Stapel angeordneten ersten Anschlag gefördert werden in eine zweite Auslageposition zu verfahren, in der die Druckereiprodukte des Produktstroms auf dem Transportband mit ihrer vorlaufenden Seite voraus an einen oberhalb eines weiteren Produktaufnahmeraums für den weiteren Stapel angeordneten weiteren Anschlag gefördert werden. Weiterhin umfasst die Vorrichtung eine erste und zweite Verstelleinrichtung, welche auf den Boden des jeweiligen ersten, bzw. zweiten Produktaufnahmeraums wirkt, um den Abstand zwischen dem Boden des jeweiligen Produktaufnahmeraums und der horizontalen Ebene, in der die Produkte auf dem Transportband zu den unterhalb des Transportbandes angeordneten Produktaufnahmeräumen gefördert werden, nach dem Einbringen, bzw. auch während des Einbringens eines Produkts zu vergrößern und dadurch nach oben hin Raum für ein nächstes Produkt zu schaffen.

Die Vorrichtung umfasst zudem eine elektronische Steuerungseinrichtung zur Wahl des gewünschten Produktaufnahmeraums sowie zum Absenken der jeweiligen Böden der Produktaufnahmeräume. Eine bestimmte Sollposition der zweiten Umlenkwalze wird in Abhängigkeit gespeicherter Parameter des Druckereiprodukts, insbesondere Format, Produktdicke, Gesamtanzahl der Produkte eines Auftrags, Anzahl der abzustapelnden Produkte pro Fach berechnet. Die Daten werden dann an den Aktuator übermittelt und die Sollposition wird über den Aktuator angefahren, damit die Produkte in den jeweiligen Produktaufnahmebehälter abgestapelt werden.

Durch die Erfindung ergibt sich der Vorteil, dass sich die Übergabelänge des Transportbandes während der laufenden Produktion an unterschiedlichste Formate der Druckereiprodukte anpassen lässt. Hierzu ist es lediglich erforderlich, die zweite und dritte Umlenkwalze durch den Aktuator entsprechend dem jeweiligen Format eines gerade abzulegenden Druckereiprodukts um einen entsprechenden Verstellensweg vor- oder zurück zu bewegen, wobei sich aufgrund der erfindungsgemäßen Bandführung und des konstanten Abstandes zwischen den beiden Umlenkwalzen die Spannung im Transportband nicht ändert und lediglich die Position, an welcher sich die zweite Umlenkwalze oberhalb des ersten oder zweiten Produktaufnahmeraums befindet, geändert wird. Es ist also mit der erfindungsgemäßen Vorrichtung möglich Druckereiprodukte mit unterschiedlichen Formaten in einem Produktstrom zuzuführen und in unterschiedlichen Stapeln zu sammeln. Allgemein ist es mit der erfindungsgemäßen Vorrichtung möglich einen Produktstrom unterschiedlichster Druckereiprodukte (Mischbetrieb) sortenrein zu stapeln.

Die Anpassung der erfindungsgemäßen Vorrichtung an die Dicke der zugeführten Druckereiprodukte erfolgt demgegenüber durch die erste oder zweite Verstelleinrichtung, über welche der Weg, um den der Boden des jeweiligen Produktaufnahmeraums, in dem ein nächstes Druckereiprodukt abgelegt werden soll, entsprechend der Dicke des Druckereiprodukts vergrößert oder verkleinert wird. Hierdurch ist es möglich, Druckereiprodukte mit unterschiedlichen Dicken wechselweise schonend auf ein und demselben Stapel abzulegen, ohne dass die Gefahr besteht, dass ein Produkt aufgrund eines zu großen Abstandes zwischen der Oberseite des zuvor abgelegten Produkts und der horizontal verlaufenden Ebene, in der die Produkte auf dem Transportband zugeführt werden, bei der Ablage im Produktaufnahmeraum beschädigt wird. Anders ausgedrückt kann durch das gesteuerte Absenken des Stapelbandes während der Produktion auf unterschiedliche Produktdicken, insbesondere Buchblockdicken, reagiert werden.

Ein weiterer Vorteil der Erfindung besteht darin, dass die eingesetzten Bandsysteme sowie auch nachfolgend noch näher beschriebenen Rollensysteme keine Relativbewegungen zwischen den Produkten untereinander und den Produkten zu den Transportmitteln verursachen.

Um die Wahl des gewünschten Produktaufnahmeraums sowie auch das Absenken der jeweiligen Böden der Produktaufnahmeräume, bzw. Stapeltische zu steuern, umfasst die erfindungsgemäße Vorrichtung eine elektronische Steuerungseinrichtung, welche den Aktuator und die Verstelleinrichtungen nach dem Einbringen eines Druckereiprodukts in einen Produktaufnahmeraum in der Weise betätigt, dass der gewünschte Produktaufnahmeraum gewählt wird und der Boden des Produktaufnahmeraums vor dem Einbringen eines nächsten Druckereiprodukts um ein Maß abgesenkt wird,welches im Wesentlichen der Dicke der eingebrachten Druckereiprodukte entspricht.

Die elektronische Steuerungseinrichtung kann mit einem Sensor und/oder einem Speicher gekoppelt sein, der ein Vorhandensein von Druckereiprodukten sowie auch die Art eines auf dem Transportband geförderten Druckereiprodukts insbesondere im Bereich der zweiten Umlenkwalze erfasst und/oder gespeichert hat. Bevorzugter Weise sind an den Produkten Informationsträger, beispielsweise Barcodes, QR-Codes oder auch RFID-Chips vorgesehen, die kodierte Informationen, insbesondere über das Format und/oder die Dicke des jeweiligen Produkts entfalten. Die auf den Informationsträgern abgelegten Informationen werden über den entsprechenden Sensor erfasst und der elektronischen Steuerungseinrichtung zugeführt, welche in Abhängigkeit von den Informationen eines auf dem Transportband geförderten und als nächstes abzulegenden Druckereiprodukts den Aktuator sowie die Verstelleinrichtungen in der Weise steuert, das das Produkt im korrekten Produktaufnahmeraum, d.h. auf dem richtigen Produktstapel, abgelegt wird.

Bei der bevorzugten Ausführungsform der Erfindung sind die zweite Umlenkwalze und die dritte Umlenkwalze an einem gemeinsamen Gestell aufgenommen, welches verschiebbar in einer gestellfesten Führung geführt ist. Das Gestell kann beispielsweise als kastenförmiger Rahmen mit vier Außenwänden ausgestaltet sein, in welchem die zweite und die dritte Umlenkwalze drehbar gelagert sind. Das Gestell wird bevorzugt über beiderseits zwischen den beiden Gehäuseaußenwänden der Vorrichtung angeordnete Linearführungen geführt, wodurch sich eine besonders leichtgängige und präzise Verschiebebewegung der beiden Umlenkwalze ergibt und der Abstand zwischen den beiden Umlenkwalze stets konstant gehalten wird.

Vorteilhafterweise ist an der Oberseite des Gestells ein das Transportband stützendes (nicht näher dargestelltes) Gleitblech angeordnet ist, welches sich in der horizontal verlaufenden Ebene tangential bis an die zweite Umlenkwalze heran erstreckt. Hierdurch ergibt sich der Vorteil, dass die Zufuhrebene für den Produktstrom beim Zuführen der Produkte in die jeweiligen Produktaufnahmeräume, bzw. auf die jeweiligen Stapel, in hohem Maße konstant gehalten wird, ohne dass die Gefahr besteht, dass sich Position der Zuführebene der zugeführten Produkte infolge eines Durchhängens des Transportbandes in Abhängigkeit vom jeweiligen Gewicht eines Produkts verändert.

Nach einem weiteren der Erfindung zu Grunde liegenden Gedanken wird eine der verfahrbaren Umlenkwalzen oder eine der gestellfesten Umlenkwalzen durch einen Antriebsmotor, insbesondere einen in der Walze aufgenommenen Elektromotor und ein Untersetzungsgetriebe, angetrieben, um das über die Walze geführte Transportband anzutreiben. Obgleich ebenfalls auch der Antrieb einer anderen Umlenkwalze, beispielsweise der ersten gestellfesten Umlenkwalze oder auch der dritten und vierten Umlenkwalze möglich ist, wird hierdurch der Vorteil erhalten, dass die Differenzgeschwindigkeit beim gemeinsamen Verschieben der zweiten und dritten Umlenkwalze in Richtung zum zweiten Produktaufnahmeraum hin durch eine entsprechende Erhöhung bzw. Erniedrigung der Drehzahl, und/oder des Drehmoments, welches von der zweiten Umlenkwalze in das Transportband eingeleitet wird, unterstützt wird. Zudem wird hierdurch die Möglichkeit geschaffen, die Vorschubgeschwindigkeit beim Verfahren der beiden Walzen durch den Aktuator und die Umfangsgeschwindigkeit der zweiten Umlenkwalze entsprechend aufeinander abzustimmen, um beim Verfahren der beiden Umlenkwalzen von der einen Auslageposition in die andere Auslageposition einen Schlupf zwischen der zweiten Umlenkwalze und dem Transportband soweit wie möglich zu verringern. So kann es in diesem Zusammenhang insbesondere vorgesehen sein, dass beim Verschieben der zweiten und dritten Umlenkwalze in Richtung des entfernt liegenden zweiten Produktaufnahmeraums die Drehzahl der zweiten Umlenkwalze um ein solches Maß reduziert wird, dass deren Oberflächengeschwindigkeit im Wesentlichen der Zufuhrgeschwindigkeit der Produkte abzüglich der Geschwindigkeit entspricht, mit der die zweite und dritte Umlenkwalze durch den Aktuator verschoben werden. Hierdurch wird die Kraft zum Verschieben des Gestells soweit wie möglich reduziert.

Gemäß einer weiteren Ausführungsform der Erfindung kann es vorgesehen sein, dass der Boden des ersten und/oder zweiten Produktaufnahmeraums jeweils ein endloses Transportband umfasst, welches über wenigstens zwei in einer im Wesentlichen horizontalen Ebene angeordnete Rollen geführt ist, deren Drehachsen im Wesentlichen parallel zur Förderrichtung der zugeführten Druckereiprodukte verlaufen und zwischen denen bevorzugt eine Gleitplatte angeordnet sein kann, welche die als Stapel auf dem Transportband abgelegten Druckereiprodukte stützt. Eine der beiden Rollen kann in diesem Falle angetrieben sein, so dass der Stapel beim Erreichen einer vorgegebenen Stapelhöhe seitlich aus dem Produktaufnahmebereich heraus auf ein weiteres Transportband oder auf eine Rollenbahn bewegt werden kann, wenn gerade der andere Produktaufnahmeraum mit Druckereiprodukten befüllt wird.

Alternativ kann der Boden des ersten und/oder zweiten Produktaufnahmeraums jeweils eine Vielzahl von in einer Ebene nebeneinander angeordneten Rollen umfassen, auf deren Oberseite die in den jeweiligen Produktaufnahmebereich eingebrachten Druckereiprodukte als Stapel abgelegt werden. Um beim Erreichen einer gewünschten Stapelhöhe den Stapel an eine nachgeordnete Fördereinrichtung, beispielsweise ein nachgeordnetes Transportband oder auch eine geneigt angeordnete Rollenbahn zu übergeben, ist dem ersten und/oder zweiten Produktaufnahmeraum bevorzugt jeweils ein motorisch betätigter Schieber zugeordnet, welcher die im Produktaufnahmeraum als Stapel übereinander abgelegten Druckereiprodukte in einer im Wesentlichen senkrecht zur Förderrichtung des Produktstroms verlaufenden Richtung aus dem jeweiligen Produktaufnahmeraum heraus auf die weitere Fördereinrichtung verschiebt. Zum Betätigen der Schieber sind vorzugsweise weitere Aktuatoren, insbesondere in Form von Hydraulikzylindern, Pneumatikzylinder oder elektrischen Stellantrieben vorgesehen, welche ebenfalls von der elektronischen Steuerungseinrichtung in Abhängigkeit von den Informationen auf den Informationsträgern und/oder der zentralen Maschinensteuerung der Druckerei, bzw. Binderei in der Weise gesteuert werden, dass beim Erreichen einer für einen Auftrag gewünschten Produktanzahl auf einem Stapel der zugehörige Schieber betätigt wird, während das Transportband die zugeführten Produkte dem anderen Produktaufnahmeraum zuführt. Hierdurch kann im gewissen Umfang eine Pufferung von Druckereiprodukten vorgenommen werden.

Es versteht sich, dass zusätzlich zu den wenigsten zwei Produktaufnahmeräumen, die vorzugsweise als seitlich geschlossene jedoch zu einer Seite hin offenen Produktaufnahmebehälter ausgestaltet sind, auch ein dritter, vierter und weiterer Produktaufnahmeraum/behälter mit einem entsprechenden Anschlag benachbart zum zweiten Produktaufnahmeraum angeordnet werden kann, der durch translatorisches Verschieben der zweiten und dritten Umlenkwalze mit dem darüber geführten Transportband anfahrbar ist. Hierdurch wird die Möglichkeit eröffnet, weitere Pufferspeicher bereit zu stellen, wenn auf dem Transportband ein Produktstrom aus drei oder mehr unterschiedlichen Druckereiprodukten gefördert wird. Ebenso ist es in diesem Falle möglich, durch Hin- und Herverfahren der zweiten Umlenkwalze zwischen den zwei oder mehr Auslagepositionen während des laufenden Betriebs des Transportbandes eine Sortierfunktion auszuführen, um z.B. Druckereiprodukte, die in unterschiedlichen vorgelagerten Maschinen, wie Klebebindern, Fadensieglern, Sattelbindern etc. zu unterschiedlichen Zeitpunkten und mit unterschiedlichen Geschwindigkeiten produziert werden, einem jeweiligen Produktaufnahmebereich/behälter zuzuführen. Da die Produtkaufnahmebehälter, welche die Produktaufnahmeräume bilden, unmittelbar Seite an Seite nebeneinander positioniert werden können, entstehen keine Lücken zwischen den Stapeln, wodurch sich eine sehr kompakte Bauweise der Vorrichtung ergibt.

Um beim Einsatz von mehreren Produktaufnahmeräumen ein Sortieren von unterschiedlichen Zugeführtenprodukte ohne eine Unterbrechung des Produktstromes zu ermöglichen, werden durch die vorgeordnete Verarbeitungsmaschinen, die den Produktstrom erzeugen, zwischen den einzelnen Produkten bevorzugt Lücken mit einer solchen Größe eingebracht, dass die bei der jeweiligen Transportgeschwindigkeit des Produktstromes vorgegebenen Zeitintervalle ausreichend sind, um innerhalb dieser die zweite Umlenkwalze mit dem darum geführten Transportband zur gewünschten Auslageposition zu verfahren.

Obgleich es sich bei den Druckereiprodukten, welche auf dem Transportband zugeführt werden, vorzugsweise um Buchblöcke und Bücher handelt, ist es ebenfalls möglich, die erfindungsgemäße Vorrichtung zum Stapeln und Zusammentragen von anderen Druckereiprodukten einzusetzen, beispielsweise von Broschüren oder Falzbogen, die insbesondere durch eine oder mehrere vorgeordnete digitale Druckmaschinen erzeugt wurden.

Die Erfindung wird nachfolgend mit Bezug auf die Zeichnungen anhand einer bevorzugten Vorrichtung zur Durchführung des Verfahrens beschrieben.

Weitere Merkmale der Erfindung sind in den Unteransprüchen beschrieben.

Die Erfindung wird nachfolgend mit Bezug auf die Zeichnungen beschrieben. Absatz in den Zeichnungen zeigen:
- Fig. 1: eine schematische Seitenansicht einer ersten Ausführungsform der erfindungsgemäßen Vorrichtung, bei der sich die zweite Umlenkwalze zum Zuführen von Druckereiprodukten zum ersten Produktaufnahmeraum in der ersten Auslageposition befindet,
- Fig. 2: eine schematische Seitenansicht der Ausführungsform von Fig. 1, bei der die zweite Umlenkwalze mit dem darüber geführten Transportband zum Zuführen von Druckereiprodukten zum zweiten Produktaufnahmeraum in die zweite Auslageposition Verfahren wurde,
- Fig. 3: eine schematische Seitenansicht einer weiteren Ausführungsform
- Fig. 4: eine schematische räumliche Darstellung einer weiteren Ausführungsform der Erfindung, bei der die Böden der Produktaufnahmeräume als Stapelbänder ausgestaltet sind, und
- Fig. 5: eine schematische räumliche Darstellung einer weiteren Ausführungsform der Erfindung, bei der die Böden der Produktaufnahmeräume mit Rollen versehen sind und das Ausstoßen der erzeugten Produktstapel durch Schieber erfolgt.

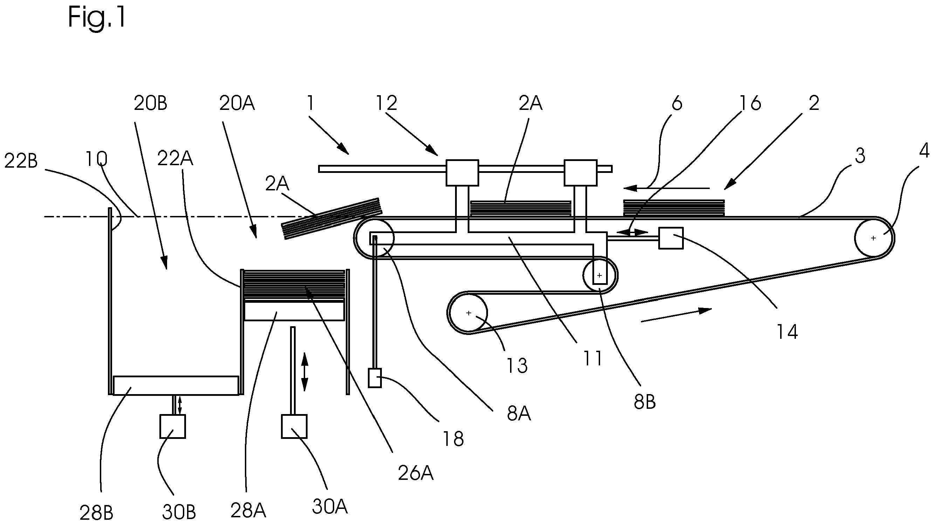

Wie in den Figuren 1 bis 5 gezeigt ist, umfasst eine erfindungsgemäße Vorrichtung 1 zum Auslegen von in einem Produktstrom 2 bereit gestellten Druckereiprodukten 2A, 2B, 2C ein endlos umlaufendes Transportband 3, auf welchem die Druckereiprodukte 2A, 2B, 2C abgelegt werden, nachdem diese von einer nicht näher gezeigten vorgeordneten Druckereimaschine, beispielsweise einer digitalen Druckmaschine oder einen Klebebinder, erzeugt wurden.

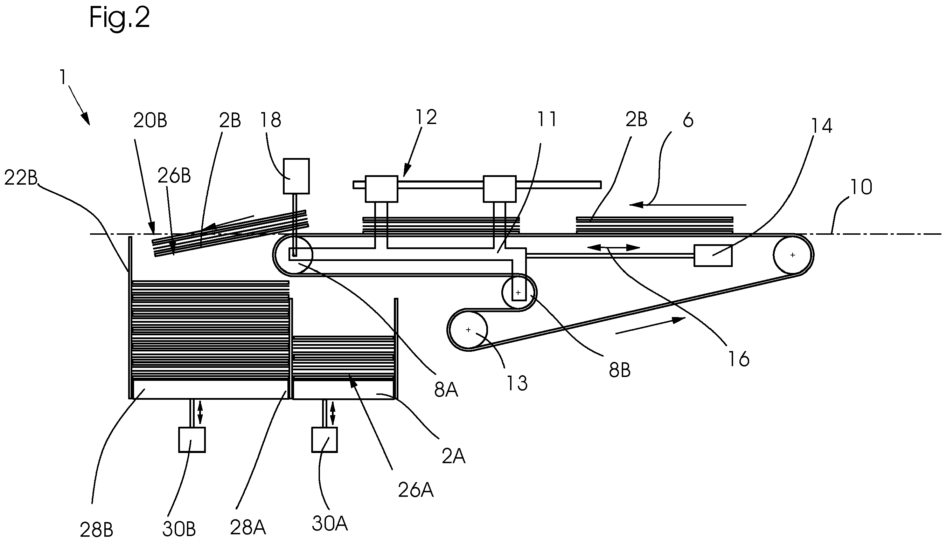

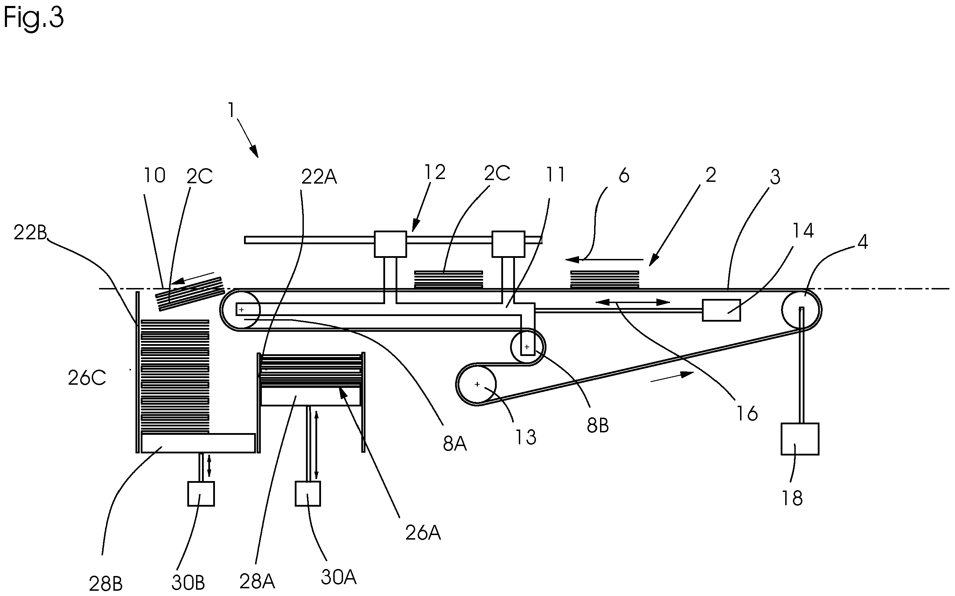

Die Druckereiprodukte 2A, 2B, 2C weisen hierbei unterschiedliche Formate auf, was durch die Bezugsziffer 2A für die kleineren Formate in Figur 1 und die Bezugsziffer 2B für die größeren Formate in Figur 2 und die Bezugsziffer 2C für ein weiteres kleines Format in Figur 3 angeordnet ist.

Wie der Darstellung von Figur 1, 2 und 3 weiterhin im Detail entnommen werden kann, umfasst die erfindungsgemäße Vorrichtung 1 eine erste gestellfeste Umlenkwalze 4, die bevorzugt frei drehbar in nicht näher gezeigten Seitenwänden gelagert ist. In der durch den Pfeil 6 angedeuteten Bewegungsrichtung der Druckereiprodukte 2A, 2B, 2C betrachtet ist stromabwärts der ersten Umlenkwalze 4 in einer durch die Oberseite des Transportbandes 3 definierten horizontal verlaufenden Ebene 10 eine zweite Umlenkwalze 8A angeordnet, die zusammen mit einer dritten Umlenkwalze 8B in einem Gestell 11 aufgenommen ist, welches sich über angedeutete Linearführungen 12 verschiebbar an den nicht dargestellten Seitenwänden der Vorrichtung 1 abstützt. Das Gestell 11 ist mit einem Aktuator 14 gekoppelt, beispielsweise einem Hydraulikzylinder oder Pneumatikzylinder oder einem Schrittmotor mit Riemenscheibe und Zahnriemen, der das Gestell 11 in der durch den Doppelpfeil 16 angegebenen Richtung parallel zur horizontal verlaufenden Ebene 10 aus einer ersten, in Figur 1 gezeigten Auslageposition in eine zweite, in Figur 2 und eine dritte in Figur 3 gezeigte Auslageposition verschiebt.

Unterhalb der dritten verfahrbaren Umlenkwalze 8B ist eine vierte gestellfeste Umlenkwalze 13 bevorzugt ebenfalls frei drehbar zwischen den Seitenwänden gelagert, die sich in horizontaler Richtung betrachtet zwischen den beiden Walzen 8A und 8B befindet und über die das endloser Transportband 3 weiterhin herumgeführt ist, bevor dieses zurück zur ersten gestellsfesten Umlenkwalze 4 zurück läuft. Die vierte Umlenkwalze 13 ist dabei in der Weise relativ zur dritten Umlenkwalze 8B angeordnet, dass das Transportband 3 zwischen den beiden Walzen 8B und 13 horizontal, bzw. parallel zur Ebene 10 verläuft. Hierdurch wird erfindungsgemäß erreicht, dass sich die Spannung des Transportbandes 10 beim Verschieben der beiden Walzen 8A, 8B in vorteilhafter Weise nicht ändert. Der Antrieb des umlaufenden Transportbandes 3 erfolgt über einen lediglich in Figur 1 und 2 schematisch angedeuteten elektrischen Antriebsmotor 18, der bevorzugt als Rohrmotor ausgebildet ist, welcher sich innerhalb der zweiten Umlenkwalze 8A befindet.

Wie der Darstellung der Figur 1 weiterhin entnommen werden kann, umfasst die erfindungsgemäße Vorrichtung 1 weiterhin einen ersten Produktaufnahmeraum in Form eines ersten Produktaufnahmebehälters 20A, an dem ein erster Anschlag 22A angeordnet ist, an welchen die Druckereiprodukte 2A mit ihrer vorlaufenden Kante voraus, im Falle von Büchern oder Bücherblöcken insbesondere ihrem Buchrücken, anschlagen, wenn sie vom Transportband 3 in der ersten Auslageposition gegen den ersten Anschlag 22A gefördert werden. Der erste Anschlag 22A, der bevorzugt Teil der der zweiten Umlenkwalze 8A fernen Seitenwand des ersten Produktaufnahmebehälters 20A ist, erstreckt sich mit seiner Oberseite bis dicht unterhalb der horizontalen Ebene 3 und ist in einem Abstand von der zweiten Umlenkwalze 8A angeordnet, der etwas größer ist, beispielsweise 2 - 5 cm größer, als die Länge der zugeführten Druckereiprodukte 2A.

Um die Höhe des ersten Stapel 26A zu verändern, ist der Boden 28A des ersten Produktaufnahmebehälters 20A über eine erste Verstelleinrichtung z.B. in Form eines Hydraulik- oder Pneumatikzylinders 30A in Richtung des nicht näher bezeichneten Doppelpfeils in Abwärtsrichtung verfahrbar, um nach dem Einbringen eines Druckereiprodukts 2A an der Oberseite eine Lücke zum Einbringen des nächsten Druckereiprodukts zu schaffen, welche eine Höhe besitzt, die im Wesentlichen der Dicke der Druckereiprodukte 2A entspricht.

Wie anhand der Darstellung der Fig. 2 ersehen werden kann, wird bei der Zufuhr von Druckereiprodukten 2B, die ein größeres Format besitzen, das Gestell 11 durch Betätigen des Aktuators 14 in die zweite Auslageposition verschoben, was bei einem ausreichend großen Abstand zwischen den Druckereiprodukten 2B bevorzugt während des laufenden Betriebs des umlaufenden Transportbandes 3 erfolgt. In dieser in Fig. 2 gezeigten zweiten Auslageposition befindet sich die zweite Umlenkwalze 8A nahe dem ersten Anschlag 22A in einer solchen Höhe, dass die horizontale Ebene 10 in einem geringen Abstand oberhalb des ersten Anschlags verläuft und die Druckereiprodukte 2B über den ersten Anschlag 22A hinweg in den zweiten Produktaufnahmeraum in Form eines zweiten Produktaufnahmebehälters 20B gefördert werden, dessen Boden 28B über eine zweite Verstelleinrichtung 30B in vertikaler Richtung verfahren werden kann, um nach der Aufnahme eines vorhergehenden Druckereiprodukts 2B eine neue Lücke zu schaffen, in der ein nachfolgendes Produkt aufgenommen wird.

Die Darstellung von lediglich zwei Produktaufnahmebehältern 20A und 20B in den Ausführungsbeispielen soll keine Beschränkung der Erfindung darstellen. Eine Erweiterung auf mehr als zwei Produktaufnahmebehälter ist ebenfalls möglich.

In Figur 3 ist eine weitere Ausführungsform dargestellt. Die Produktaufnahmebehälter 20A und 20B sind gleich groß und auf das Maximalformat der zu stapelnden Druckereiprodukte ausgelegt. Wie Figur 3 zeigt ist es durch entsprechende Betätigung des Aktuators 14 möglich die zweite Umlenkwalze 8A in eine solche Position zu bringen, dass auch Druckereiprodukte 2C mit einem kleineren Format in den jeweiligen Produktaufnahmebehälter 20A und 20B (wie hier dargestellt) abgelegt und gestapelt werden können. Weiterhin ist in Figur 3 dargestellt, dass nicht die Umlenkrolle 8A mit einem Antriebsmotor versehen ist, sondern die Umlenkrolle 4. Alternativ kann auch die Umlenkrolle 13 mit dem Antriebsmotor 18 versehen werden da hier die größte Umschlingung des Transportbandes 3 vorliegt, was sich auf den Antrieb positiv auswirkt.

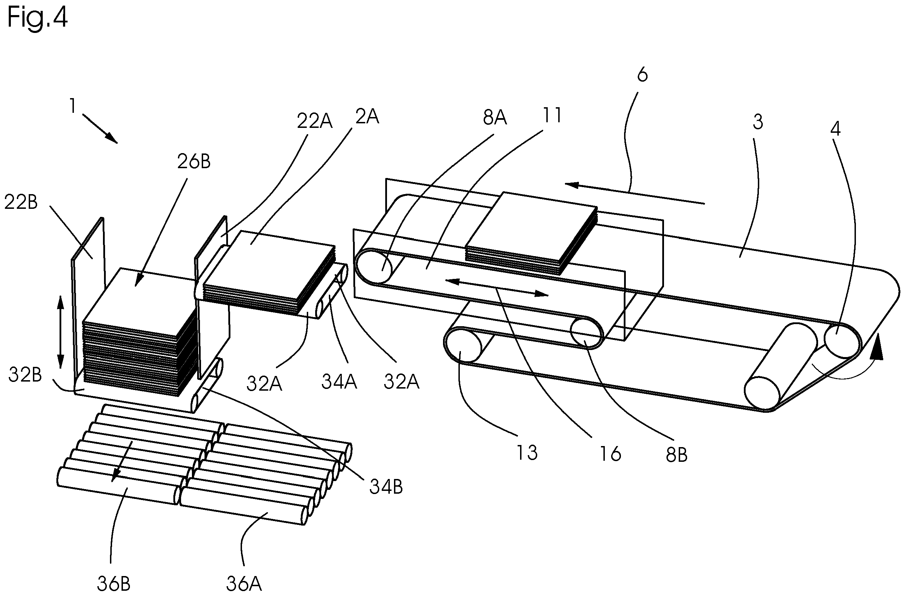

Gemäß der Darstellung der Figur 4 können die beiden Böden des ersten und zweiten Produktaufnahmebehälters/Produktaufnahmeraums 20A, 20B zwei in einer im Wesentlichen horizontalen Ebene angeordnete Rollen 32A und 32B umfassen, über die ein endloses Transportband 34A, 34B geführt ist, auf dessen Oberseite die in den jeweiligen Produktaufnahmeraum 20A, 20B eingebrachten Druckereiprodukte 2A, 2B als Stapel abgelegt werden, von denen zumindest eine Rolle 32 über einen nicht näher gezeigten Antrieb antreibbar ist, um einen erzeugten Stapel 26A, 26B beim Erreichen einer gewünschten Höhe auf eine Rollenbahn 36A, 36B zu verschieben, wie dies in Fig. 3 angedeutet ist.

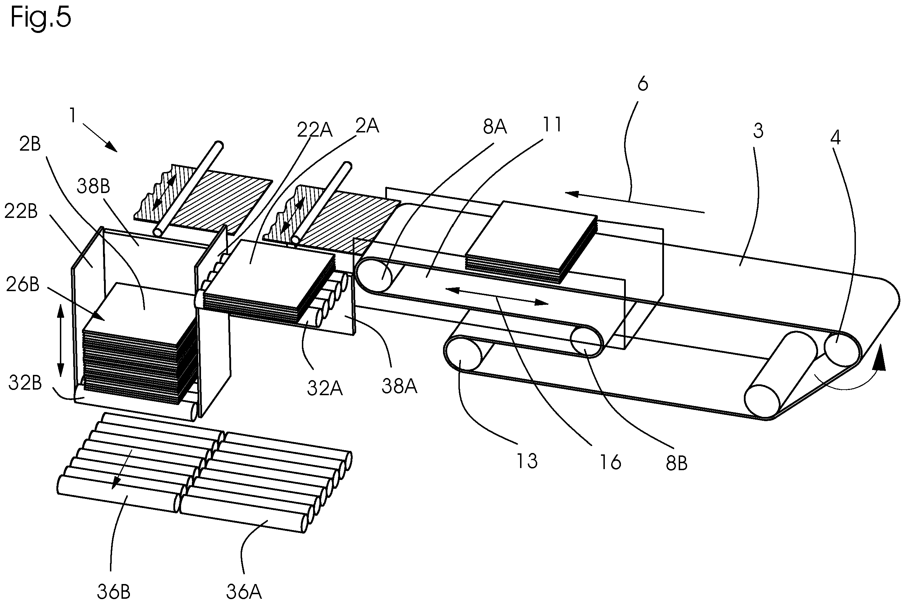

Alternativ können die Böden der beiden Produktaufnahmeräume 20A, 20B als in Fig. 4 angedeutete Rollenböden ausgestaltet sein, von denen die Produktstapel 26A, 26B mit Hilfe eines jeweiligen, in Fig. 5 angedeuteten Schiebers 38A, 38B auf die Rollenbahn 36A, 36B verschoben werden. Der Aktuator 14, der Antriebsmotor 18 für das Transportband 3, die erste und zweite Verstelleinrichtung 30A, 30B und bevorzugt auch die nicht näher gezeigten Antriebe zum Betätigen der Schieber 38A, 38B, bzw. Rollen 32A, 32B der Rollenböden sind bevorzugt mit einer in den Figuren nicht näher gezeigten elektronischen Steuerungseinrichtung verbunden, die die zuvor beschriebenen Stell- und Antriebsvorgänge steuert, bzw. steuert und regelt.

### Bezugszeichenliste

- 1: erfindungsgemäße Vorrichtung
- 2: Produktstrom
- 2A: Druckereiprodukte mit kleinem Format
- 2B: Druckereiprodukte mit großem Format
- 2C: Druckereiprodukte mit kleinem Format
- 3: umlaufendes Transportband
- 4: erste gestellfeste Umlenkwalze
- 6: Pfeil der die Bewegungsrichtung der Druckereiprodukte angibt
- 8A: zweite verfahrbare Umlenkwalze
- 8B: dritte verfahrbare Umlenkwalze
- 10: horizontal verlaufenden Ebene
- 11: Gestell
- 12: Führungen
- 13: vierte gestellfeste Umlenkwalze
- 14: Aktuator
- 16: Doppelpfeil
- 18: Antriebsmotor
- 20A: erster Produktaufnahmebehälter
- 20B: zweiter Produktaufnahmebehälter
- 22A: erste Anschlag
- 22B: zweite Anschlag
- 26A: erster Stapel
- 26B: weiterer Stapel
- 26C: weiterer Stapel
- 28A: Boden des ersten Produktaufnahmebehälters
- 28B: Boden des zweiten Produktaufnahmebehälters
- 30A: erste Verstelleinrichtung
- 30B: zweite Verstelleinrichtung
- 32A: Rollen des ersten Rollenbodens
- 32B: Rollen des zweiten Rollenbodens
- 34A: endloses Transportband des Rollenbodens im ersten Produktaufnahmebehälter
- 34B: endloses Transportband des Rollenbodens im zweiten Produktaufnahmebehälter
- 36A: Rollenbahn
- 36B: Rollenbahn
- 38A: Schieber für ersten Produktaufnahmebehälter
- 38B: Schieber für zweiten Produktaufnahmebehälter

## Patentansprüche

1. Vorrichtung (1) zum Auslegen von in einem Produktstrom (2) zugeführten Druckereiprodukten (2A, 2B, 2C), insbesondere Buchblöcken oder Büchern, in mindestens zwei voneinander getrennten Stapeln (26A, 26B, 26C), mit einem endlos umlaufenden Transportband (3), auf welchem die Druckereiprodukte (2A, 2B, 2C) abgelegt werden, einer ersten oberen stromaufwärtigen gestellfesten Umlenkwalze (4), einer im Wesentlichen in einer horizontalen Ebene (10) mit der ersten Umlenkwalze (4) angeordneten zweiten oberen stromabwärtigen verfahrbaren Umlenkwalze (8A), einer unterhalb der zweiten Umlenkwalze (8A) angeordneten und gemeinsam mit dieser verfahrbaren dritten Umlenkwalze (8B) sowie einer unterhalb der dritten Umlenkwalze (8B) angeordneten gestellfesten vierten Umlenkwalze (13), über die das Transportband (3) geführt ist, und mit einem Aktuator (14) zum gemeinsamen Verfahren der zweiten und dritten Umlenkwalze (8A, 8B) parallel zur horizontalen Ebene (10) aus einer ersten Auslageposition, in der die Druckereiprodukte (2A, 2B, 2C) mit ihrer vorlaufenden Seite voraus an einen ober- halb eines ersten Produktaufnahmeraums (20A) für den ersten Stapel (26A) angeordneten ersten Anschlag (22A) gefördert werden in eine zweite Auslageposition, in der die Druckereiprodukte (2A, 2B, 2C) mit ihrer vorlaufenden Seite voraus an einen oberhalb eines weiteren Produktaufnahmeraums (20B) für den weiteren Stapel (26B, 26 C) angeordneten weiteren Anschlag (22B) gefördert werden, sowie einer ersten und zweiten Verstelleinrichtung (30A, 30B) zur Veränderung des Abstandes zwischen dem Boden (28A, 28B) des ersten und zweiten Produktaufnahmeraums (20A, 20B) und der horizontalen Ebene (10), **dadurch gekennzeichnet, dass** die Vorrichtung (1) eine elektronische Steuerungseinrichtung zur Wahl des gewünschten Produktaufnahmeraums (20A, 20B) sowie zum Absenken der jeweiligen Böden (28A, 28B) der Produktaufnahmeräume (20A, 20B) umfasst, wobei die Steuerungseinrichtung derart angelegt ist, dass die Auslageposition der Umlenkwalze (8A) in Abhängigkeit gespeicherter Parameter des Druckereiprodukts, insbesondere Format, Produktdicke, Gesamtanzahl der Produkte eines Auftrags, Anzahl der abzustapelnden Produkte pro Fach berechnet wird, die Daten an den Aktuator (14) übermittelt werden, die Auslageposition über den Aktuator angefahren wird und die Produkte in den jeweiligen Produktaufnahmeraum (20A, 20B) abgestapelt werden.

2. Vorrichtung nach Anspruch 1,
**dadurch gekennzeichnet,**
**dass** die zweite Umlenkwalze (8A) und die dritte Umlenkwalze (8B) an einem gemeinsamen Gestell (11) aufgenommen sind, welches verschiebbar in einer gestellfesten Führung (12) geführt ist.

3. Vorrichtung nach einem der vorhergehenden Ansprüche,
**dadurch gekennzeichnet,**
**dass** eine der verfahrbaren Umlenkwalzen (8A) oder eine der gestellfesten Umlenkwalzen (4, 13) durch einen Antriebsmotor (18), insbesondere einen in der Walze aufgenommenen Elektromotor und ein Untersetzungsgetriebe, zum Antrieb des endlos umlaufenden Transportbandes (3) angetrieben wird.

4. Vorrichtung nach einem der vorhergehenden Ansprüche,
**dadurch gekennzeichnet,**
**dass** der Boden (28A, 28B) des ersten und/oder zweiten Produktaufnahmeraums (20A, 20B) jeweils ein über wenigstens zwei in einer im Wesentlichen horizontalen Ebene angeordnete Rollen (32A, 32B) geführtes endloses Transportband (34A, 34B) umfasst, auf dessen Oberseite die in den jeweiligen Produktaufnahmeraum (20A, 20B) eingebrachten Druckereiprodukte (2A, 2B, 2C) als Stapel abgelegt werden.

5. Vorrichtung nach einem der Ansprüche 1 bis 3,
**dadurch gekennzeichnet,**
**dass** der Boden (28A, 28B) des ersten und/oder zweiten Produktaufnahmeraums (20A; 20B) jeweils eine Vielzahl von in einer Ebene nebeneinander angeordneten Rollen (32A, 32B) umfasst, auf deren Oberseite die in den jeweiligen Produktaufnahmeraum (20A, 20B) eingebrachten Druckereiprodukte als Stapel abgelegt werden.

6. Vorrichtung nach einem der vorhergehenden Ansprüche,
**dadurch gekennzeichnet,**
**dass** dem ersten und/oder zweiten Produktaufnahmeraum (20A, 20B) jeweils ein angetriebener Schieber (38A, 38B) zugeordnet ist, welcher die im Produktaufnahmeraum(20A, 20B) als Stapel (26A, 26B, 26C) übereinander abgelegten Druckereiprodukte in einer im Wesentlichen senkrecht zur Förderrichtung des Produktstroms (2) verlaufenden Richtung aus dem jeweiligen Produktaufnahmeraum (20A, 20B) heraus auf eine weitere Fördereinrichtung, insbesondere eine geneigt verlaufende Rollenbahn (36A, 36B) oder ein weiteres umlaufendes Förderband verschiebt.

7. Vorrichtung nach einem der Ansprüche 1 bis 5,
**dadurch gekennzeichnet,**
**dass** mindestens jeweils eine der Rollen (32A, 32B) des ersten und/oder zweiten Produktaufhahmeraums (20A/20B) mit einem Antriebmotor verbunden ist, der die Ausfuhr der Stapel (26A, 26B, 26C) bewirkt.

8. Vorrichtung nach einem der vorhergehenden Ansprüche,
**dadurch gekennzeichnet,**
**dass** die elektronische Steuerungseinrichtung die Verstelleinrichtung nach dem Einbringen eines Druckereiprodukts (2A, 2B) in einen Produktaufnahmeraum (20A, 20B) in der Weise betätigt, dass der Boden (28A, 28B) des Produktaufhahmeraums vor dem Einbringen eines nächsten Druckereiprodukts (2A, 2B) um ein Maß abgesenkt wird, welches im Wesentlichen der Dicke der eingebrachten Druckereiprodukte entspricht.

9. Vorrichtung nach Anspruch 8,
**dadurch gekennzeichnet,**
**dass** die elektronische Steuerungseinrichtung mit einem Sensor und/oder Speicher gekoppelt ist, der ein Vorhandensein von Druckereiprodukten (2A, 2B) sowie auch die Art eines auf dem Transportband (3) geförderten Druckereiprodukts (2A, 2B) insbesondere im Bereich der zweiten Umlenkwalze (8A) erfasst, und/oder gespeichert hat und dass die Steuerungseinrichtung den Aktuator (14) bei umlaufendem Transportband (3) in Abhängigkeit von den Signalen des Sensors und/oder Speichers betätigt, um die zweite und dritte Umlenkwalze (8A, 8B) gemeinsam unter Beibehaltung einer im Wesentlichen unveränderten Spannung des Transportbandes (3) aus der ersten Auslageposition in die zweite Auslageposition und zurück zu verfahren.

10. Verfahren zum Auslegen oder Abstapeln von Druckereiprodukten mit einer Vorrichtung nach einem der vorhergehenden Ansprüche mit folgenden Verfahrensschritten:
a) Übernehmen des Druckereiproduktes auf das Transportband (3) von einer vorgelagerten Buchbindereimaschine
b) Berechnen der Auslageposition der Umlenkwalze (8A) in Abhängigkeit gespeicherter Parameter des Druckereiprodukts, insbesondere Format, Produktdicke, Gesamtanzahl der Produkte eines Auftrags, Anzahl der abzustapelnden Produkte pro Fach
c) Übermittlung der Daten an den Aktuator (14) und Anfahren der Auslageposition über den Aktuator (14)
d) Abstapeln der Produkte in den jeweiligen Produktaufnahmeraum (20A, 20B)
e) Ausfuhr der vollständigen Stapel.

## Claims

1. Device (1) for delivering printed products (2A, 2B, 2C), in particular book blocks or books, supplied in a product stream (2), to at least two separate stacks (26A, 26B, 26C), the device (1) comprising an endlessly circulating conveyor belt (3) on which the printed products (2A, 2B, 2C) are deposited, a first upper upstream deflection roller (4) fixed to a frame, a second upper downstream, displaceable deflection roller (8A) which is arranged in a substantially horizontal plane (10) with the first deflection roller (4), a third deflection roller (8B) which is arranged below the second deflection roller (8A) and is displaceable jointly therewith, and a fourth deflection roller (13) which is arranged below the third deflection roller (8B) and is fixed to the frame, by means of which deflection rollers the conveyor belt (3) is guided,
and comprising an actuator (14) for jointly displacing the second and third deflection rollers (8A, 8B) parallel to the horizontal plane (10) from a first delivery position, in which the printed products (2A, 2B, 2C) are conveyed with their leading edge forward to a first stop (22A) arranged above a first product-receiving chamber (20A) for the first stack (26A), to a second delivery position, in which the printed products (2A, 2B, 2C) are conveyed with their leading edge forward to a further stop (22B) arranged above a further product-receiving chamber (20B) for the further stack (26B, 26C), and a first and second adjustment device (30A, 30B) for changing the distance between the bases (28A, 28B) of the first and second product-receiving chambers (20A, 20B) and the horizontal plane (10),
**characterised in that**
the device (1) includes an electronic control device for selecting the desired product-receiving chamber (20A, 20B) and for lowering the respective bases (28A, 28B) of the product-receiving chambers (20A, 20B), the control device being designed such that the delivery position of the deflection roller (8A) is calculated as a function of stored parameters of the printed products, in particular format, product thickness, total number of products in an order and number of products to be stacked per compartment, the data being communicated to the actuator (14), and the delivery position being moved to by means of the actuator and the products being stacked in the respective product-receiving chamber (20A, 20B).

2. Device according to Claim 1,
**characterised in that**
the second deflection roller (8A) and the third deflection roller (8B) are mounted on a common frame (11) which is guided displaceably in a guide (12) fixed to the frame.

3. Device according to either of the preceding claims,
**characterised in that**
one of the displaceable deflection rollers (8A), or one of the deflection rollers (4, 13) fixed to the frame, is driven by a drive motor (18), in particular an electric motor contained in the roller, and a reduction gear, for driving the endlessly circulating conveyor belt (3).

4. Device according to any one of the preceding claims,
**characterised in that**
the base (28A, 28B) of the first and/or second product-receiving chamber (20A, 20B) includes a respective endless conveyor belt (34A, 34B) guided by means of at least two rollers (32A, 32B) arranged in a substantially horizontal plane, on the upper side of which conveyor belt (34A, 34B) the printed products (2A, 2B, 2C) introduced into the respective product-receiving chamber (20A, 20B) are deposited as a stack.

5. Device according to any one of Claims 1 to 3,
**characterised in that**
the base (28A, 28B) of the first and/or second product-receiving chamber (20A; 20B) includes respectively a plurality of rollers (32A, 32B) arranged side-by-side in a plane, on the upper side of which rollers (32A, 32B) the printed products introduced into the respective product-receiving chamber (20A, 20B) are deposited as a stack.

6. Device according to any one of the preceding claims,
**characterised in that**
a respective driven slide element (38A, 38B) is associated with the first and/or second product-receiving chamber (20A, 20B), which slide element (38A, 38B) pushes the printed products deposited one upon the other as a stack (26A, 26B, 26C) in the product-receiving chamber (20A, 20B) in a direction substantially perpendicular to the conveying direction of the product stream (2) out of the respective product-receiving chamber (20A, 20B) and on to a further conveyor device, in particular an inclined roller conveyor (36A, 36B), or on to a further circulating conveyor belt.

7. Device according to any one of Claims 1 to 5,
**characterised in that**
at least one of the respective rollers (32A, 32B) of the first and/or second product-receiving chamber (20A/20B) is connected to a drive motor which causes the stacks (26A, 26B, 26C) to be moved out.

8. Device according to any one of the preceding claims,
**characterised in that**,
after a printed product (2A, 2B) has been introduced into a product-receiving chamber (20A, 20B), the electronic control device activates the adjustment device in such a way that the base (28A, 28B) of the product-receiving chamber is lowered, before a following printed product (2A, 2B) is introduced, by an amount which is substantially equal to the thickness of the printed products introduced.

9. Device according to Claim 8,
**characterised in that**
the electronic control device is coupled to a sensor and/or memory which detects, and/or has stored, in particular in the region of the second deflection roller (8A), a presence of printed products (2A, 2B) as well as the type of a printed product (2A, 2B) conveyed on the conveyor belt (3), and **in that** the control device activates the actuator (14), while the conveyor belt is circulating (3), as a function of the signals of the sensor and/or memory in order to displace the second and third deflection rollers (8A, 8B) jointly, while maintaining a substantially unchanged tension of the conveyor belt (3), from the first delivery position to the second delivery position and back.

10. Method for delivering or stacking printed products using a device according to any one of the preceding claims, comprising the following process steps:
a) transferring the printed products to the conveyor belt (3) from a preceding bookbinding machine;
b) calculating the delivery position of the deflection roller (8A) as a function of stored parameters of the printed product, in particular format, product thickness, total number of products in an order, number of products to be stacked per compartment;
c) transmitting the data to the actuator (14) and moving to the delivery position by means of the actuator (14);
d) stacking the products in the respective product-receiving chamber (20A, 20B);
e) moving out the complete stacks.

## Revendications

1. Dispositif (1) pour délivrer des produits d'imprimerie (2A, 2B, 2C) apportés dans un flux de produits (2), en particulier des corps de livres ou des livres, en au moins deux piles (26A, 26B, 26C) mutuellement séparées,
avec une bande transporteuse (3) circulant sans fin, sur laquelle sont déposés les produits d'imprimerie (2A, 2B, 2C),
avec un premier cylindre de renvoi supérieur (4) en amont, stationnaire, avec un deuxième cylindre de renvoi supérieur (8A) en aval, disposé sensiblement dans le même plan horizontal (10) que le premier cylindre de renvoi (4) et pouvant être déplacé en translation, avec un troisième cylindre de renvoi (8B), disposé en dessous du deuxième cylindre de renvoi (8A) et pouvant être déplacé en translation conjointement avec ce dernier, ainsi qu'avec un quatrième cylindre de renvoi (13), disposé en dessous du troisième cylindre de renvoi (8B), stationnaire et autour duquel passe la bande transporteuse (3),
et avec un actionneur (14) pour le déplacement conjoint des deuxième et troisième cylindres de renvoi (8A, 8B) parallèlement au plan horizontal (10) d'une première position de délivrance, dans laquelle les produits d'imprimerie (2A, 2B, 2C) sont transportés avec leur côté antérieur en premier contre une première butée (22A) disposée au-dessus d'un premier espace récepteur de produits (20A) pour la première pile (26A), dans une deuxième position de délivrance dans laquelle les produits d'imprimerie (2A, 2B, 2C) sont transportés avec leur côté antérieur en premier contre une autre butée (22B), disposée au-dessus d'un autre espace récepteur de produits (20B) pour l'autre pile (26B, 26C),
ainsi qu'avec un premier et un deuxième organes de réglage (30A, 30B) pour modifier la distance entre le fond (28A, 28B) du premier et du deuxième espaces récepteurs de produits (20A, 20B) et le plan horizontal (10),
**caractérisé en ce que** le dispositif (1) comprend une unité de commande électronique pour sélectionner l'espace récepteur de produits souhaité (20A, 20B) et pour abaisser les fonds respectifs (28A, 28B) des espaces récepteurs de produits (20A, 20B),
sachant que l'unité de commande est conçue de telle sorte que la position de délivrance du cylindre de renvoi (8A) est calculée en fonction de paramètres mémorisés du produit d'imprimerie, en particulier du format, de l'épaisseur du produit, du nombre total de produits d'une commande et du nombre de produits à délivrer par compartiment, que les données sont transmises à l'actionneur (14), que la position de délivrance est atteinte au moyen de l'actionneur et que les produits sont délivrés dans l'espace récepteur de produits respectif (20A, 20B).

2. Dispositif selon la revendication 1, **caractérisé en ce que** le deuxième cylindre de renvoi (8A) et le troisième cylindre de renvoi (8B) sont reçus sur un bâti commun (11), qui est guidé en translation dans un guide stationnaire (12).

3. Dispositif selon l'une des revendications précédentes, **caractérisé en ce qu'**un des cylindres de renvoi mobiles en translation (8A) ou un des cylindres de renvoi stationnaires (4 ; 13) est entraîné par un moteur d'entraînement (18), en particulier un moteur électrique logé dans le cylindre et une transmission démultiplicatrice, afin d'entraîner la bande transporteuse (3) circulant sans fin.

4. Dispositif selon l'une des revendications précédentes, **caractérisé en ce que** le fond (28A, 28B) du premier et/ou du deuxième espace récepteur de produits (20A, 20B) comprend respectivement une bande transporteuse sans fin (34A, 34B) passant autour d'au moins deux rouleaux (32A, 32B) disposés dans un plan essentiellement horizontal et sur le côté supérieur de laquelle sont déposés sous forme de pile les produits d'imprimerie (2A, 2B, 2C) introduits dans l'espace récepteur de produits respectif (20A, 20B).

5. Dispositif selon l'une des revendications 1 à 3, **caractérisé en ce que** le fond (28A, 28B) du premier et/ou du deuxième espace récepteur de produits (20A, 20B) comprend respectivement une pluralité de rouleaux (32A, 32B) disposés les uns à côté des autres dans un même plan, sur le côté supérieur desquels sont déposés sous forme de pile les produits d'imprimerie introduits dans l'espace récepteur de produits respectif (20A, 20B).

6. Dispositif selon l'une des revendications précédentes, **caractérisé en ce qu'**un poussoir entraîné (38A, 38B) est respectivement associé au premier et/ou au deuxième espace récepteur de produits (20A, 20B), poussoir qui déplace les produits d'imprimerie, déposés les uns au-dessus des autres sous forme de pile (26A, 26B, 26C) dans l'espace récepteur de produits (20A, 20B), dans une direction s'étendant essentiellement perpendiculairement à la direction de transport du flux de produits (2), hors de l'espace récepteur de produits respectif (20A, 20B) sur un autre équipement de transport, en particulier sur un convoyeur à rouleaux (36A, 36B) s'étendant en inclinaison, ou sur une autre bande transporteuse circulante.

7. Dispositif selon l'une des revendications 1 à 5, **caractérisé en ce qu'**au moins un rouleau respectif parmi les rouleaux (32A, 32B) du premier et/ou du deuxième espace récepteur de produits (20A/20B) est relié à un moteur d'entraînement qui produit l'évacuation des piles (26A, 26B, 26C).

8. Dispositif selon l'une des revendications précédentes, **caractérisé en ce que** l'unité de commande électronique actionne l'organe de réglage, à la suite de l'introduction d'un produit d'imprimerie (2A, 2B) dans un espace récepteur de produits (20A, 20B), de telle sorte que le fond (28A, 28B) de l'espace récepteur de produits est, avant l'introduction d'un produit d'imprimerie suivant (2A, 2B), abaissé dans une mesure correspondant pour l'essentiel à l'épaisseur des produits d'imprimerie introduits.

9. Dispositif selon la revendication 8, **caractérisé en ce que** l'unité de commande électronique est couplée à un capteur et/ou à une mémoire qui a détecté, en particulier dans la région du deuxième cylindre de renvoi (8A), et/ou mémorisé une présence de produits d'imprimerie (2A, 2B) ainsi que le type d'un produit d'imprimerie (2A, 2B) transporté sur la bande transporteuse (3), et **en ce que** l'unité de commande actionne l'actionneur (14), tandis que la bande transporteuse (3) circule, en fonction des signaux du capteur et/ou de la mémoire, afin de déplacer conjointement le deuxième et le troisième cylindres de renvoi (8A, 8B) de la première position de délivrance dans la deuxième position de délivrance et en retour, tout en conservant une tension essentiellement inchangée de la bande transporteuse (3).

10. Procédé pour délivrer ou séparer en piles des produits d'imprimerie avec un dispositif selon l'une des revendications précédentes, comprenant les étapes de procédé suivantes :
a) transfert du produit d'imprimerie sur la bande transporteuse (3) par une relieuse installée en amont,
b) calcul de la position de délivrance du cylindre de renvoi (8A) en fonction de paramètres mémorisés du produit d'imprimerie, en particulier du format, de l'épaisseur du produit, du nombre total de produits d'une commande et du nombre de produits à délivrer par compartiment,
c) transmission des données à l'actionneur (14) et atteinte de la position de délivrance au moyen de l'actionneur (14),
d) délivrance des produits dans l'espace récepteur de produits respectif (20A, 20B),
e) évacuation des piles complètes.
